# EUROPÄISCHE PATENTSCHRIFT

(11) **EP 3 791 961 B1**
(45) Veröffentlichungstag und Bekanntmachung des Hinweises auf die Patenterteilung: **09.08.2023**
(21) Anmeldenummer: 20000285.5
(22) Anmeldetag: 14.08.2020
(51) Int. Cl.: B02C 13/16, B02C 13/26, B02C 13/28, B02C 13/282, B02C 13/14, B02C 13/18

(54) **PRALLMÜHLE ZUR ZERKLEINERUNG VON FESTSTOFFEN**
IMPACT MILL FOR CRUSHING OF SOLIDS
BROYEUR À CHOCS DESTINÉ AU CONCASSAGE DES SOLIDES

(30) Priorität: 21.08.2019 DE 102019005889
(43) Veröffentlichungstag der Anmeldung: 17.03.2021
(73) Patentinhaber: Trenn- und Sortiertechnik GmbH, 89264 Weißenhorn (DE)
(72) Erfinder: Riggenmann, Michael, 89264 Weißenhorn (DE)
(74) Vertreter: Baur & Weber Patentanwälte PartG mbB

(56) Entgegenhaltungen:
- EP-A1- 3 318 330
- GB-A- 2 058 608
- US-A- 2 153 590

## Beschreibung

Die Erfindung betrifft eine Prallmühle zur Zerkleinerung von Feststoffen, insbesondere von Abfallstoffen, sowie zur Auftrennung von Verbundmaterialien aus Metallen, Kunststoffen, Mineralstoffen und. dergleichen, bestehend aus einem auf einem Maschinensockel angeordneten Rotor mit senkrecht angeordneter Rotorwelle sowie einem die Rotorwelle mit Abstand umschließenden Gehäusemantel, wobei der Gehäusemantel an seiner Innenseite mit in axialer Richtung der Rotorwelle verlaufenden, auswechselbar angeordneten Prallrippen und der Rotor mit ebenfalls auswechselbaren, den Prallrippen gegenüberstehenden Schlaghämmern versehen ist, und wobei die Prallrippen und die Schlaghämmer jeweils im wesentlichen gleichmäßig über den Umfang verteilt angeordnet sind, wobei weiter der Gehäusemantel von zwei voneinander trennbaren Gehäusehalbschalen gebildet ist, die durch eine in der Achse der Rotorwelle verlaufenden Ebene geteilt sind. Durch die Zweiteilung des Gehäusemantels kann eine einfache Trennung der beiden. Gehäusehalbschalen voneinander vorgenommen werden, wodurch nicht nur die mit den Prallrippen bestückten Innenwände des Gehäusemantels frei zugänglich werden, sondern in gleicher Weise auch der Rotor mit den Schlaghämmern.

Derartige Vorrichtungen sind aus dem Stand der Technik, z.B aus EP 3318330 A1, bekannt und werden dort eingesetzt, um eine Auftrennung von Verbundmaterialen, insbesondere deren Aufschließen zu erreichen. Von besonderer Bedeutung sind hierbei Verbunde von Metall und Kunststoffen; es lassen sich jedoch genauso Verbundmaterialien aufschließen, die aus unterschiedlichen Metallen oder auch unterschiedlichen Kunststoffen bestehen. Die Trennung wird dadurch erreicht, dass die physikalischen Eigenschaften der einzelnen Komponenten der Verbundstoffe unterschiedlich sind, wodurch beim Auftreffen der Materialien auf die Prallrippen bzw. die Schlaghämmer eine unterschiedliche elastische bzw. plastische Verformung erreicht wird, in deren Folge die Trennung geschieht.

Da derartige Prallmühlen im bestimmungsgemäßen Gebrauch einem erheblichen Verschleiß der Schlagwerkzeuge ausgesetzt sind, ist eine regelmäßige Wartung bzw. ein Austausch der Schlagwerkzeuge erforderlich. Dies macht üblicherweise aufwendige Demontage- und Montagearbeiten erforderlich.

Der Erfindung liegt daher die Aufgabe zugrunde, eine Prallmühle der eingangs genannten Art derart auszubilden, dass sowohl die Schlaghämmer als auch die Prallrippen mit geringem Aufwand zugänglich gemacht werden können, so dass sowohl eine Inspektion, eine Reinigung als auch ein ggf. notwendig gewordener Austausch einfach und mit geringem Zeitaufwand vorgenommen werden können.

Diese Aufgabe wird nach der Erfindung dadurch gelöst, dass jede Gehäusehalbschale nahe ihres axial verlaufenden Randes an einer zur Rotorwelle parallelen Schwenkwelle angeschlossen ist. Auf diese Weise können die beiden Gehäusehalbschalen - nach erfolgter Trennung voneinander - einfach aufgeschwenkt werden, so dass die Gehäusehalbschalen zur weiteren Bearbeitung an der Prallmühle angeschlossen bleiben, was die Inspektion sowie mechanische Arbeiten zum Austausch der Prallrippen erleichtert.

Ferner sind die Schwenkwellen mit ihrem unteren Ende an dem Maschinensockel und mit ihrem oberen Ende in einem den Maschinensockel übergreifenden, mit diesem verbundenen U-förmigen Maschinenrahmen gelagert.

Hierbei ist es weiter von Vorteil, wenn die Gehäusehalbschalen an den Schwenkwellen axial verschiebbar gelagert sind. Hierdurch besteht die Möglichkeit, die Gehäusehalbschalen zum Aufschwenken vom Maschinensockel geringfügig abzuheben.

Um die im Betrieb auf den Gehäusemantel einwirkenden hohen Kräfte aufnehmen zu können, sieht die Erfindung vor, dass die Gehäusehalbschalen an ihren axial verlaufenden Rändern miteinander und/oder an ihrem dem Maschinensockel anliegenden Rand mit diesem verschraubt sind.

Ferner ist im Rahmen der Erfindung vorgesehen, dass die Gehäusehalbschalen an ihrem dem Maschinensockel abgewandten Rand durch einen halbkreisförmigen Deckel verschlossen sind, wobei der Deckel mit einer Einfüll-/Zuluftöffnung versehen ist. Auf diese Weise kann die Prallmühle kontinuierlich mit zu trennendem verbundmaterial beschickt werden.

In entsprechender Weise ist vorgesehen, dass innerhalb des Gehäusemantels im Boden des Maschinensockels eine Materialaustritts-I Abluftöffnung vorgesehen ist.

Im Übrigen hat es sich als vorteilhaft erwiesen, wenn die Rotorwelle in einem Lager am Maschinensockel sowie am Maschinenrahmen zwischen den Schwenkwellen gelagert ist.

Die Prallrippen ruhen vorteilhafterweise in einer Nut der Türhälften und weisen abwechselnd eine unterschiedliche radiale Höhe auf. Dadurch bilden die jeweils radial weiter nach innen vorstehenden Prallrippen geeignete Kanten, an denen das Verbundmaterial aufgeschlossen werden kann.

Der Rotor kann je nach Ausgestaltung der Erfindung einen oder mehrere axial versetzt angeordnete Rotorteller aufweisen, auf denen die Schlaghämmer schwenkbar gelagert sind.

Schließlich ist es von Vorteil, wenn der Abstand zwischen den Schlaghämmern und den Prallrippen vertikal nach unten abnimmt. Auf diese Weise erfolgt im oberen Bereich zunächst eine grobe Zerkleinerung, wobei der Zerkleinerungsgrad wegen des abnehmenden Abstands nach unten größer wird. Dabei kann der Durchsatz an Material dadurch vergrößert werden, dass über die Zuluft- bzw. Abluftöffnung ein Luftstrom erzeugt wird.

Im Folgenden wird die Erfindung an einem in der Zeichnung dargestellten Ausführungsbeispiel näher erläutert; es zeigen:
- Fig. 1: eine Prallmühle nach der Erfindung im geschlossenen Zustand,
- Fig. 2: den Gegenstand nach Figur 1 mit geöffneten Gehäusehalbschalen,
- Fig. 3: eine separate Darstellung des Rotors mit den Schlaghämmern,

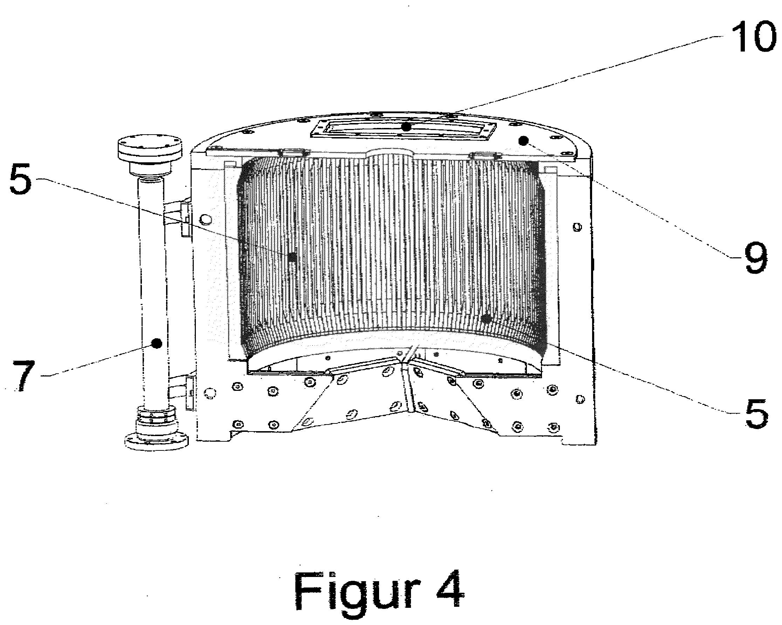

- Fig. 4: eine Ansicht der Innenmantelfläche einer einzelnen Gehäusehalbschale,

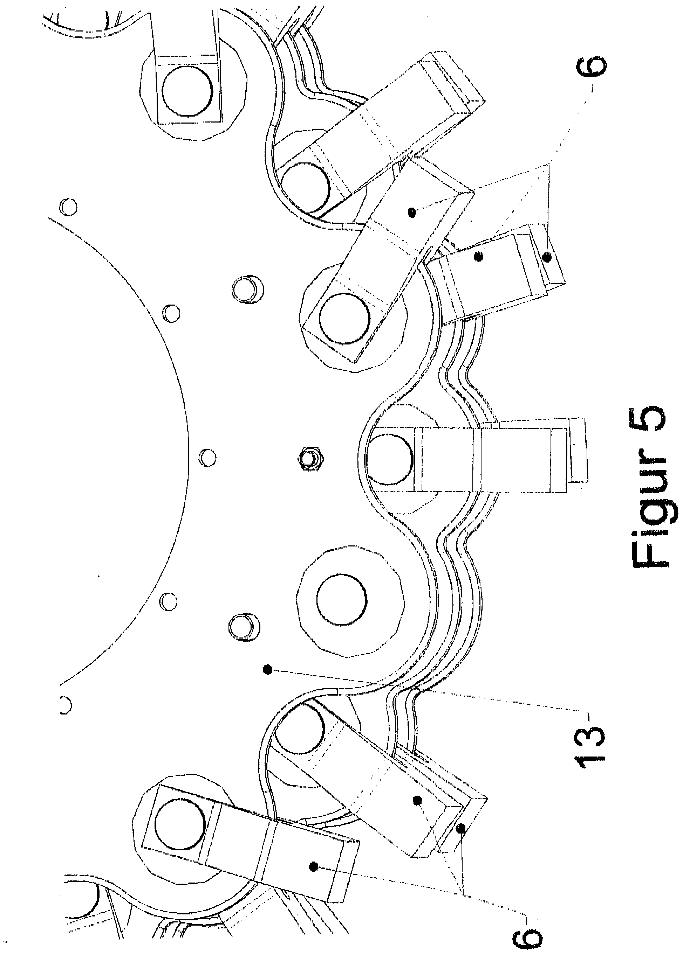

- Fig. 5: eine Detailansicht eines Rotortellers mit den schwenkbar gelagerten Schlaghämmern.

Die in der Zeichnung dargestellte Prallmühle dient zur Zerkleinerung von Feststoffen, insbesondere von Abfallstoffen, sowie zur Auftrennung von Verbundmaterialien aus Metallen, Kunststoffen, Mineralstoffen und dergleichen.

Dazu besteht die Prallmühle im einzelnen aus einem auf einem Maschinensockel 1 angeordneten Rotor 2 mit senkrecht angeordneter Rotorwelle 3 sowie aus einem die Rotorwelle 3 mit Abstand umschließenden Gehäusemantel 4.

Um eine Zerkleinerung der Feststoffe zu erreichen, ist der Gehäusemantel 4 an seiner Innenseite mit in axialer Richtung der Rotorwelle verlaufenden, auswechselbar angeordnetem Prallrippen 5 versehen.

Der Rotor 2 ist ebenfalls mit auswechselbaren, den Prallrippen 5 gegenüberstehenden Schlaghämmern 6 versehen. Die Prallrippen 5 und die Schlaghämmer 6 sind hierbei jeweils im Wesentlichen gleichmäßig über den Umfang verteilt angeordnet.

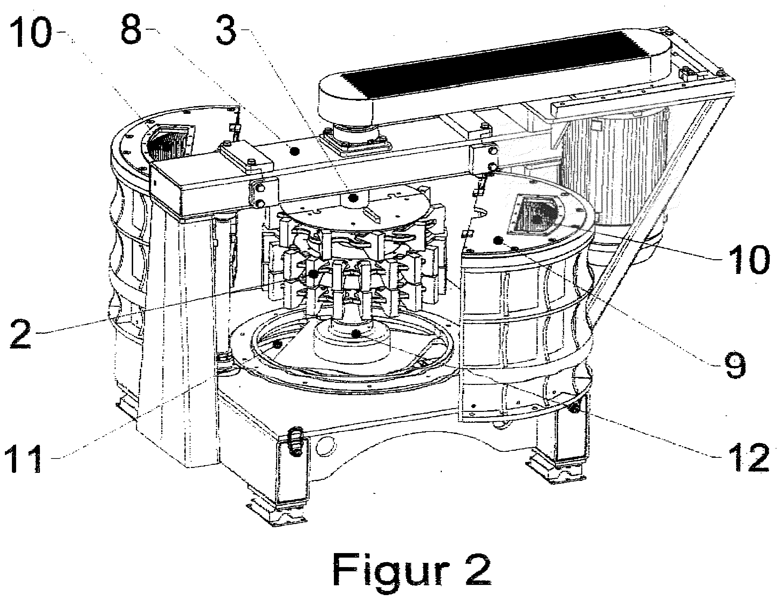

Wie insbesondere aus der Figur 2 zu ersehen ist, ist der Gehäusemantel 4 von zwei voneinander trennbaren Gehäusehalbschalen 4.1,4.2 gebildet, die durch eine in der Achse der Rotorwelle 3 verlaufenden Ebene geteilt sind. Hierdurch entstehen zwei untereinander gleich große Gehäusehalbschalen 4.1,4.2, die sich zu Wartungsarbeiten auf einfache Art und Weise voneinander trennen lassen.

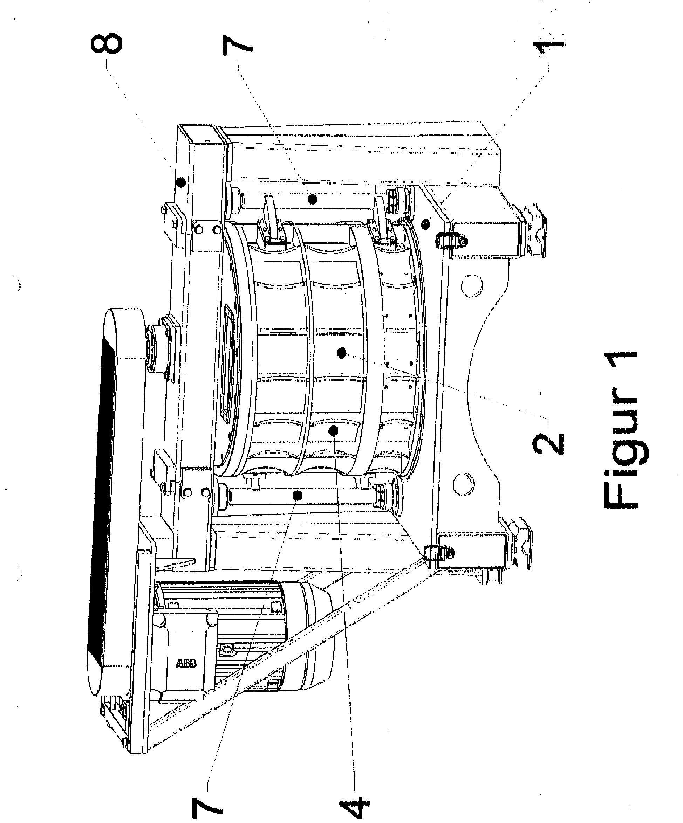

Wie weiter aus den Figuren 1 und 2 zu ersehen ist, ist jede der beiden Gehäusehalbschalen 4.1,4.2 nahe ihres axial verlaufenden Randes an einer zur Rotorwelle 3 parallelen Schwenkwelle 7 angeschlossen. Die Schwenkwellen 7 sind dabei mit ihrem unteren Ende an dem Maschinensockel 1 und mit ihrem oberen Ende an einem U-förmigen Maschinenrahmen 8 gelagert, der am Maschinensockel 1 angeschlossen ist und diesen übergreift.

Um die Gehäusehalbschalen 4.1,4.2 einfach aufschwenken zu können, sind diese an den Schwenkwellen 7 axial verschiebbar gelagert. Dies erleichert das Öffnen durch geringes Anheben der Gehäusehalbschalen 4.1,4.2 insbesondere auch dann, wenn zwischen dem unteren Rand der Gehäusehalbschale und dem Maschinensockel zerkleinerte Feststoffe eingedrungen sind, die beim Öffnen Reibung erzeugen können.

Um die im Betrieb auftretenden hohen Kräfte gut aufnehmen zu können, sind die Gehäusehalbschalen 4.1,4.2 an ihren axial verlaufenden Rändern miteinander und/oder an ihrem dem Maschinensockel 1 anliegenden Rand mit diesem verschraubt. Wie sich weiter aus den Figuren 1 bis 3 ersehen lässt, sind die Gehäusehalbschalen 4.1,4.2 an ihrem dem Maschinensockel 1 abgewandten Rand durch einen halbkreisförmigen Deckel 9 verschlossen. In diesem Deckel 9 ist eine Einfüllöffnung 10 vorgesehen, die einerseits der Einfüllung der zu zerkleinernden Feststoffe dient; zugleich kann diese öffnung 10 auch für Zuluft verwendet werden.

In entsprechender Weise ist innerhalb des Gehäusemantels 4 im Boden des Maschinensockels 1 eine Austrittsöffnung 11 vorgesehen, durch die einerseits das zerkleinerte Material und andererseits die Abluft abgeführt werden kann.

Die Rotorwelle 3 ist ebenfalls in einem Lager 12 am Maschinensockel 1 einerseits sowie am Maschinenrahmen 8 andererseits zwischen den Schwenkwellen 7 gelagert.

Die Prallrippen 5 ruhen in in der Zeichnung nicht näher dargestellter Weise in einer Nut der Gehäusehalbschalen 4.1,4.2 und weisen abwechselnd eine unterschiedliche radiale Höhe auf, so dass die jeweils radial nach innen vorstehende Prallrippe 5 der Zerkleinerung der Feststoffe dient.

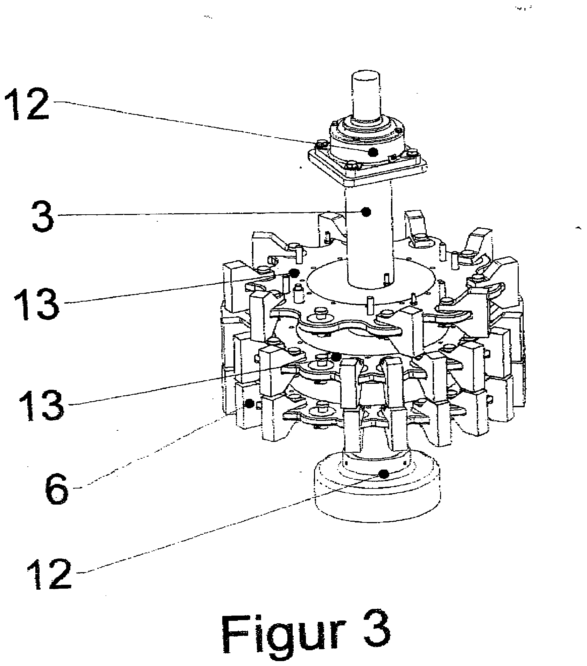

Wie sich aus der Figur 3 ersehen lässt, weist der Rotor 3 mehrere axial versetzt angeordnete Rotorteller 13 auf, auf denen die Schlaghämmer 6 schwenkbar gelagert sind. Dadurch besteht einerseits die Möglichkeit, dass die Schlaghämmer 6 einzelnen, sehr harten Materialien ausweichen können, so dass ein Blockieren des Rotors 2 verhindert wird; andererseits ist auf diese Weise durch Lösen eines Schwenkbolzens ein einfacher Austausch der Schlaghämmer 6 möglich.

Schließlich ist die Anordnung der Schlaghämmer 6 so gewählt, dass der Abstand zwischen diesen und den Prallrippen 5 vertikal nach unten abnimmt, so dass auf dem Weg von der Einfüllöffnung 10 oben zur Austrittsöffnung unten eine kontinuierliche Zerkleinerung der Feststoffe erfolgt.

## Patentansprüche

1. Prallmühle zur Zerkleinerung von Feststoffen, insbesondere von Abfallstoffen, sowie zur Auftrennung von Verbundmaterialien aus Metallen, Kunststoffen, Mineralstoffen und dergleichen, bestehend aus einem auf einem Maschinensockel (1) angeordneten Rotor (2) mit senkrecht angeordneter Rotorwelle (3) sowie einem die Rotorwelle (3) mit Abstand umschließenden Gehäusemantel (4), wobei der Gehäusemantel (4) an seiner Innenseite mit in axialer Richtung der Rotorwelle (3) verlaufenden, auswechselbar angeordneten Prallrippen (5) und der Rotor (2) mit ebenfalls auswechselbaren, den Prallrippen (5) gegenüberstehenden Schlaghämmern (6) versehen ist, und wobei die Prallrippen (5) und die Schlaghämmer (6) jeweils im wesentlichen gleichmäßig über den Umfang verteilt angeordnet sind, wobei weiter der Gehäusemantel (4) von zwei voneinander trennbaren Gehäusehalbschalen (4.1,4.2) gebildet ist, die durch eine in der Achse der Rotorwelle (3) verlaufenden Ebene geteilt sind, **dadurch gekennzeichnet, dass** jede Gehäusehalbschale (4.1,4.2) nahe ihres axial verlaufenden Randes an einer zur Rotorwelle (3) parallelen Schwenkwelle (7) angeschlossen ist und die Schwenkwellen (7) mit ihrem unteren Ende an dem Maschinensockel (1) und mit ihrem oberen Ende in einem den Maschinensockel (1) übergreifenden, mit diesem verbundenen U-förmigen Maschinenrahmen (8) gelagert sind.

2. Prallmühle nach Anspruch 1, **dadurch gekennzeichnet, dass** die Gehäusehalbschalen (4.1,4.2) an den Schwenkwellen (7) axial verschiebbar gelagert sind.

3. Prallmühle nach den Ansprüchen 1 bis 2, **dadurch gekennzeichnet, dass** die Gehäusehalbschalen (4.1,4.2) an ihren axial verlaufenden Rändern miteinander und/oder an ihrem dem Maschinensockel (1) anliegenden Rand mit diesem verschraubt sind.

4. Prallmühle nach den Ansprüchen 1 bis 3, **dadurch gekennzeichnet, dass** die Gehäusehalbschalen (4.1,4.2) an ihrem dem Machinensockel (1) abgewandten Rand durch einen halbkreisförmigen Deckel (9) verschlossen sind, wobei der Deckel (9) mit einer Einfüll-/ ) Zuluftöffnung (10) versehen ist.

5. Prallmühle nach den Ansprüchen 1 bis 4, **dadurch gekennzeichnet, dass** innerhalb des Gehäusemantels (4) im Boden des Maschinensockels (1) eine Materialaustritts-/Abluftöffnung (11) vorgesehen ist.

6. Prallmühle nach den Ansprüchen 1 bis 5, **dadurch gekennzeichnet, dass** die Rotorwelle (3) in einem Lager (12) am Maschinensockel (1) sowie am Maschinenrahmen (8) zwischen den Schwenkwellen (7) gelagert ist.

7. Prallmühle nach den Ansprüchen 1 bis 6, **dadurch gekennzeichnet, dass** die Prallrippen (5) in einer Nut der Gehäusehalbschalen (4.1,4.2) ruhen und abwechselnd eine unterschiedliche radiale Höhe aufweisen.

8. Prallmühle nach den Ansprüchen 1 bis 7, **dadurch gekennzeichnet, dass** der Rotor (2) einen oder mehrere axial versetzt angeordnete Rotorteller (13) aufweist, auf denen die Schlaghämmer (6) schwenkbar gelagert sind.

9. Prallmühle nach den Ansprüchen 1 bis 8, **dadurch gekennzeichnet, dass** der Abstand zwischen den Schlaghämmern (6) und den Prallrippen (5) vertikal nach unten abnimmt.

## Claims

1. Impact mill for crusting of solids, in particular waste materials, and for separating composite materials from metals, plastics materials, minerals and the like, consisting of a rotor (2) which is arranged on a machine base (1) and has a vertically arranged rotor shaft (3), and a housing casing (4) which surrounds the rotor shaft (3) at a distance, the housing casing (4) being provided on its inner side with exchangeable impact ribs (5) extending in the axial direction of the rotor shaft (3), and the rotor (2) being provided with striking hammers (6) which are also exchangeable and are opposite the impact ribs (5), and the impact ribs (5) and the striking hammers (6) each being arranged so as to be distributed substantially uniformly over the circumference, the housing casing (4) being formed by two mutually separable housing half shells (4.1, 4.2) which are divided by a plane extending in the axis of the rotor shaft (3), **characterized in that** each housing half shell (4.1, 4.2), close to its axially extending edge, is connected to a pivot shaft (7) which is parallel to the rotor shaft (3), and the pivot shafts (7) are mounted with their lower end on the machine base (1) and with their upper end in a U-shaped machine frame (8) which spans the machine base (1) and is connected thereto.

2. Impact mill according to claim 1, **characterized in that** the housing half shells (4.1, 4.2) are mounted on the pivot shafts (7) so as to be axially movable.

3. Impact mill according to claims 1 to 2, **characterized in that** the housing half shells (4.1, 4.2) are screwed to one another at their axially extending edges and/or at the edge thereof that abuts the machine base (1).

4. Impact mill according to claims 1 to 3, **characterized in that** the housing half-shells (4.1, 4.2) are closed at the edge thereof that faces away from the machine base (1) by a semicircular cover (9), the cover (9) being provided with a filling/) air supply opening (10).

5. Impact mill according to claims 1 to 4, **characterized in that** a material outlet/exhaust air opening (11) is provided within the housing casing (4) in the bottom of the machine base (1).

6. Impact mill according to claims 1 to 5, **characterized in that** the rotor shaft (3) is mounted in a bearing (12) on the machine base (1) and on the machine frame (8) between the pivot shafts (7).

7. Impact mill according to claims 1 to 6, **characterized in that** the impact ribs (5) rest in a groove of the housing half shells (4.1, 4.2) and alternately have a different radial height.

8. Impact mill according to claims 1 to 7, **characterized in that** the rotor (2) has one or more rotor plates (13) which are arranged in an axially offset manner and on which the striking hammers (6) are pivotably mounted.

9. Impact mill according to claims 1 to 8, **characterized in that** the distance between the impact hammers (6) and the impact ribs (5) decreases vertically downward.

## Revendications

1. Broyeur à chocs permettant le concassage de matières solides, en particulier de déchets, ainsi que la séparation de matériaux composites en métaux, matières plastiques, matières minérales et analogues, constitué d'un rotor (2) disposé sur un socle de machine (1) et comportant un arbre de rotor (3) disposé verticalement, ainsi que d'une enveloppe de carter (4) entourant à distance l'arbre de rotor (3), l'enveloppe de carter (4) étant pourvue sur sa face intérieure de nervures à chocs (5) s'étendant dans la direction axiale de l'arbre de rotor (3) et disposées de manière interchangeable, et le rotor (2) étant pourvu de marteaux de percussion (6) également interchangeables et situés en face des nervures à chocs (5), et les nervures à chocs (5) et les marteaux de percussion (6) étant respectivement répartis de manière sensiblement uniforme sur la circonférence, l'enveloppe de carter (4) étant en outre constituée de deux demi-coques de carter (4.1, 4.2) pouvant être séparées l'une de l'autre et divisées par un plan s'étendant dans l'axe de l'arbre de rotor (3), **caractérisé en ce que** chaque demi-coque de carter (4.1, 4.2) est raccordée, à proximité de son bord s'étendant axialement, à un arbre pivotant (7) parallèle à l'arbre de rotor (3), et les arbres pivotants (7) sont montés, avec leur extrémité inférieure, sur le socle de machine (1) et, avec leur extrémité supérieure, dans un châssis de machine (8) en forme de U qui recouvre le socle de machine (1) et est relié à celui-ci.

2. Broyeur à chocs selon la revendication 1, **caractérisé en ce que** les demi-coques de carter (4.1, 4.2) sont montées de manière à pouvoir être déplacées axialement sur les arbres pivotants (7).

3. Broyeur à chocs selon les revendications 1 à 2, **caractérisé en ce que** les demi-coques de carter (4.1, 4.2) sont vissées l'une à l'autre au niveau de leurs bords s'étendant axialement et/ou sont vissées audit socle de machine au niveau de leur bord adjacent au socle de machine (1).

4. Broyeur à chocs selon les revendications 1 à 3, **caractérisé en ce que** les demi-coques de carter (4.1, 4.2) sont fermées, au niveau de leur bord opposé au socle de machine (1), par un couvercle (9) en forme de demi-cercle, le couvercle (9) étant pourvu d'une ouverture de remplissage/) d'amenée d'air (10).

5. Broyeur à chocs selon les revendications 1 à 4, **caractérisé en ce qu'**une ouverture de sortie de matériau/d'évacuation d'air (11) est prévue à l'intérieur de l'enveloppe de carter (4) dans le fond du socle de machine (1).

6. Broyeur à chocs selon les revendications 1 à 5, **caractérisé en ce que** l'arbre de rotor (3) est monté dans un palier (12) au niveau du socle de machine (1) ainsi qu'au niveau du châssis de machine (8) entre les arbres pivotants (7).

7. Broyeur à chocs selon les revendications 1 à 6, **caractérisé en ce que** les nervures à chocs (5) reposent dans une rainure des demi-coques de carter (4.1, 4.2) et présentent alternativement des hauteurs radiales différentes.

8. Broyeur à chocs selon les revendications 1 à 7, **caractérisé en ce que** le rotor (2) présente un ou plusieurs disques de rotor (13) décalés axialement, sur lesquels les marteaux de percussion (6) sont montés de manière à pouvoir pivoter.

9. Broyeur à chocs selon les revendications 1 à 8, **caractérisé en ce que** la distance entre les marteaux de percussion (6) et les nervures à chocs (5) diminue verticalement vers le bas.
